# EUROPEAN PATENT APPLICATION

(11) **EP 4 644 837 A1**
(43) Date of publication of application: **05.11.2025**
(21) Application number: 24174038.0
(22) Date of filing: 03.05.2024
(51) Int. Cl.: G01C 21/00

(54) **METHOD FOR GENERATING A GEOREFERENCED MAP FOR AN EGO VEHICLE**

(71) Applicant: AUMOVIO Autonomous Mobility Germany GmbH, 85057 Ingolstadt (DE)
(72) Inventor: Dr. Szirmai, Gergely Zsolt, 1092 Budapest (HU); Kiss, Gabor Balint, 1092 Budapest (HU); Kastantin, Firas, 1092 Budapest (HU); Pollner, Barnabas, 1092 Budapest (HU); Kiss, Geza, 1092 Budapest (HU)
(74) Representative: Aumovio Corporation

(57) **Abstract**

The invention relates to a method for generating a georeferenced map for an ego vehicle (1) comprising the following steps:
- Creating (S1) a first map based on sensor data from environmental sensors located in the ego vehicle (1);
- Recording (S2) a vehicle trajectory (T1, T2) from odometry and from GNSS in a memory;
- Generating (S3) segments (s₁, s₂, ..., sₖ) of the vehicle trajectories;
- Registering (S4) the generated segments (s₁, s₂, ..., sₖ) by determining transformation parameters when matching the segments (s₁, s₂, ..., sₖ) of the odometry trajectory (T1) to the segments (s₁, s₂, ... , sₖ) of the GNSS trajectory (T2);
- Creating (S5) a histogram of the transformation parameters using the histogram voting technique to select the transformation parameters with the highest number of votes, and calculating the number of peaks, their widths and their distances in order to estimate the mapping quality;
- Generating (S6) a georeferenced map using the selected transformation parameters.

## Description

The invention relates to a method for generating a georeferenced map for an ego vehicle.

### State of the art

Autonomous driving requires the precise localization of the ego vehicle. Such localization is done with the help of a map. In the map, several detectable landmarks are indicated, together with the optional start and mandatory final poses of the ego vehicle. Usually, the mission requires the autonomous vehicle to go from the start pose to the final pose. In most situations, the vehicle should be able to detect when it gets close to the start pose (or in the absence of it, when the vehicle enters the map) to initialize its localization. Localization becomes important because there may be parts of the area of the mission where GNSS availability is limited or non-existent. Also, GNSS accuracy is usually not sufficient for mission planning.

In the prior art, the georeferenced map creation is done with sensor fusion of the odometry information with GNSS measurements. Two main directions can be found in the literature. In the first category, the fusion is done by filtering the GNSS data, usually by a Kalman-filter. In the second category, there are methods based on SLAM (Simultaneous Localization and Mapping), where odometry information together with GNSS readings are used and optimized together to create a georeferenced map.

In the prior art, the two groups of methods have different strengths and shortcomings.

In the filtering-based solution, the map is created by adding new landmarks as they are detected during the mapping phase. These directions are observed in the vehicle frame and their georeferenced position is calculated with the latest pose from the Kalman-filter. Unfortunately, this pose is not necessarily continuous, as jumps in the GNSS pose, even if they are smoothed somewhat, may still be present. These jumps in the pose result in maps with ghost images of certain landmarks.

The SLAM methods, on the other hand, are more reliable and give more accurate maps free of ghost images. But SLAM methods have significantly larger memory and processing power consumption.

### Object of the invention

The object of the invention is to provide a method to create a georeferenced map, i.e. how to assign GNSS coordinates to each point on the map. In the solution, an environment wherein GNSS availability is limited needs to be tolerated: GNSS is either completely blocked in some parts or its accuracy is very low.

### Description of the invention

The previously described objective is achieved by a method according to independent claim 1. Further preferable embodiments are subject matter of the dependent claims.

This method provides a georeferenced map that is free of the discontinuities from the noisy GPS measurement. Unlike the filtering-based solution, it is not an online, but an offline solution: The map is generated online using dead reckoning for the odometry, while the georeferenced result is not generated on the fly but becomes available after a post-processing step. In this second step, the non-systematic part of the GNSS noise is reduced by using statistics. This step is very fast and therefore the large memory and processing power needed for SLAM algorithms is not necessary. Moreover, the final georeferencing is based on the whole trajectory, therefore the result can be more precise than if each position was determined based on the previous inputs only, as in the case of online solutions.

According to the invention, a method for generating a georeferenced map for an ego vehicle is described, comprising the following steps.
- Creating a first map based on sensor data from environmental sensors located in the ego vehicle;
- Recording a vehicle trajectory from odometry and from GNSS in a memory;
- Generating segments of the vehicle trajectories;
- Registering the generated segments by determining transformation parameters when matching the segments of the odometry trajectory to the segments of the GNSS trajectory;
- Creating a histogram of the transformation parameters using the histogram voting technique to select the transformation parameters with the highest number of votes, and calculating the number of peaks, their widths and their distances in order to estimate the mapping quality;
- Generating a georeferenced map using the selected transformation parameters.

In a first step, the map is created. This mapping uses detections coming from various sensors. During mapping, the vehicle pose_is determined by dead reckoning the odometry data. As a result, a map is received that is free of the discontinuities related to GNSS errors, but the map is not yet georeferenced after this step and may contain inconsistencies related to integration error of the odometry.

The used sensors are preferably surround view cameras producing semantic segmentation images and structure from motion point clouds, but further embodiments can include radar sensors, ultrasonic sensors, or LIDAR sensors.-

As an application, the georeferenced semantic map is then used in a localization framework, where current detections are scan matched to the map and the vehicle pose is determined recursively by estimating the probability distribution of the vehicle position and orientation. The detections may or may not be from the same semantic-segmentation network that was used for the map creation, but we need to be able to map semantic classes of the detections to the semantic classes stored on the map.

During map creation, both the odometry and the GPS trajectories are recorded in memory.

These trajectories are then sliced into segments. More precisely, both the odometry and GNSS trajectories are sliced into corresponding segments based on their time stamps and each odometry segment is registered to each corresponding GNSS segment. The corresponding segments are registered, and an ensemble of transformations is obtained. Ideally without GNSS errors and odometry drift, all these transformations would be identical. In reality, GNSS may contain errors related to multipath reflections or other reasons, and odometry usually drifts. These errors manifest in that the transformation parameters become unidentical and can be thought of as random variables.

In order to process the joint distribution of the 3 transformation parameters (displacement in the x direction, displacement in the y direction, and the orientation angle), a 3-parameter histogram of the transformations is created and a histogram voting technique is used. The bin sizes of the histogram reflect the prior knowledge of the length scale of the errors. Typically, a few tens of centimeters in the displacement variables and a few hundredth of radian in the orientation. The peaks of the histogram are searched with standard voting methods; brute-force search is also an option.

The optimal transformation parameters are then selected, by locating the highest peak (the bin with the highest number of votes), and finally averaging over the parameter values in the highest peak. The width of the peak and the distance to neighboring peaks (if present) are also calculated, and the error is estimated based on these parameters, which serve as summary statistics.

All the steps are done on the ego vehicle's hardware. The map generation and the recording of the trajectories is done while the vehicle is in motion. The other mentioned steps are done in a post-processing phase and the generated georeferenced map is then provided after the maneuver was stopped. These latter steps require only a small amount of processing power, but need the full map and trajectory information, which is available only when the vehicle is finally stopped.

In a preferred embodiment, the segments of the trajectories have a predefined number of points. Each segment can for example contain 4 points both in the odometry and the GPS cases. The number of points per segment can change in other embodiments. This will result in many matching segments. If the data rates of the GPS and the odometry providers are not the same, the denser data source is down-sampled, e.g. with linear interpolation. The goal is to have matching points in the segments:
In another preferred embodiment of the invention, matching points of the segments of the respective trajectory are determined when matching the segments of the trajectories.

It is further preferred that the matching points have the same timestamps. The corresponding odometry and GPS points should have the same timestamps.

The corresponding pieces are registered and an ensemble of transformations is obtained. Ideally, without GNSS errors and odometry drift, all these transformations would be identical. In reality, GNSS may contain errors related to multipath reflections or other reasons, and odometry usually drifts. These errors manifest in that the transformation parameters become unidentical and can be thought of as random variables.

In a preferred embodiment the transformation parameters comprise a 2-D translation and a rotation. The transformation parameters (2-D translation and rotation) corresponding to georeferencing are calculated as the ones corresponding to highest estimated probability. These can be determined by creating a histogram out of the ensemble of transformation parameters and selecting the bin with the highest count and then calculating the average of the parameters falling into this bin.

The histogram is also used to evaluate the quality of the mapping.

If there is only one peak, especially if this peak has a narrow distribution, it indicates that the mapping was successful. The overall error in the georeferencing, i.e. in the georeferenced coordinates correspond to the half width of the distribution. In the other situation, where there are more distinct peaks, it indicates, that either the odometry has slipped occasionally, or the GNSS signal quality has varied. This indicates that either the mapping was not perfect due to odometry slippage, or the mapping was good, but georeferencing is inaccurate due to the GNSS errors. Nevertheless, the distance of the peaks gives information about the accuracy of the mapping. Further analysis of the places where the change of parameters happened, which can be looked up from the trajectories, also helps to identify the root cause of the transformation parameter change: whether it was an odometry slip (which happens typically at sharper turns) or was a GNSS condition change, which happens when the vehicle is getting out from an area with tall structures or vegetation.

In the preferred embodiment, the registration of each segment is done with a Kabsch algorithm. For each segment, the center of mass of both odometry and GPS segments is calculated. The center of mass is then subtracted from the points. Then the rotation is calculated that maps the odometry segment to the GPS segment with the help of a singular value decomposition of the covariance matrix of the odometry and GPS segments. The translation then can be easily calculated with the help of the rotation matrix and the knowledge of the difference of the centers of mass. The resulting transformation for each segment pair is stored. In other embodiments, other methods can be used for the segment registration.

Further preferred embodiments are subject matter of the figures.
Fig. 1: a schematic flow-chart of an embodiment of the method;
Fig. 2: a schematic example of the transformation of odometry to GNSS trajectories.

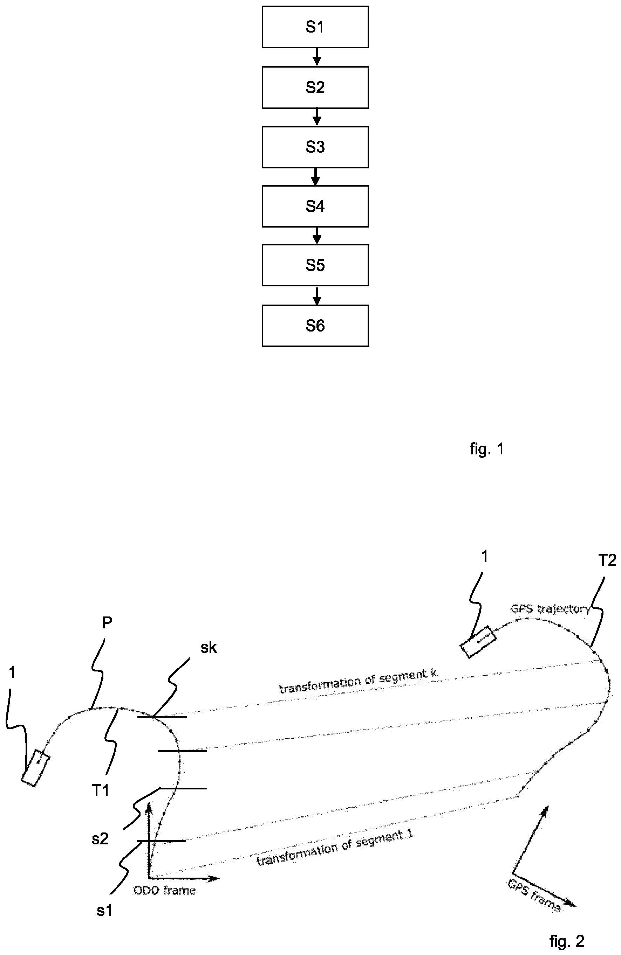

In figure 1, a schematic flow-chart of a preferred embodiment of the proposed method for generating a georeferenced map for an ego vehicle is shown. In step S1, a first map based on sensor data from environmental sensors located in the ego vehicle is created. In step S2, a vehicle trajectory from odometry and from GNSS is recorded in memory. In step S3, segments of the vehicle trajectories are generated. In step S4, the generated segments are registered. In step S5, transformation parameters are determined when matching the segments of the odometry trajectory to the segments of the GNSS trajectory. In step S6, a histogram of the transformation parameters is created. In step S7, the transformation parameters with the highest probability is selected. In step S8, a georeferenced map is generated using the selected transformation parameters.

In figure 2, a schematic example of the transformation of odometry to GNSS trajectories is shown. In this figure, two trajectories T1 and T2 of the ego vehicle 1 are shown. Trajectory T1 is an odometry trajectory and trajectory T2 is a GPS trajectory. Each trajectory (T1, T2) is divided into segments s₁, ..., sₖ. Each of the k segments sᵢ, i = 1..k consists of a predefined number of points P, e.g. P = 4 points per segment sᵢ. To match the points and/or the segments s₁, ..., sₖ of the odometry trajectory to the GNSS trajectory points and/or segments s₁, ..., sₖ, the points need to be transformed from the odometry frame to the GPS frame. Therefore, the needed transformation parameters need to be defined, which match the difference in rotation and translation between the odometry and the GPS frame.

### Reference list

- 1: Ego-vehicle
- S1-S6: Method steps
- s1, s2, ... sk: Segments
- T1, T2: Trajectories
- P: Points

## Claims

1. Method for generating a georeferenced map for an ego vehicle (1) comprising the following steps:
- Creating (S1) a first map based on sensor data from environmental sensors located in the ego vehicle (1);
- Recording (S2) a vehicle trajectory (T1, T2) from odometry and from GNSS in a memory;
- Generating (S3) segments (s₁, s₂, ..., sₖ) of the vehicle trajectories;
- Registering (S4) the generated segments (s₁, s₂, ..., sₖ) by determining transformation parameters when matching the segments (s₁, s₂, ..., sₖ) of the odometry trajectory (T1) to the segments (s₁, s₂, ..., sₖ) of the GNSS trajectory (T2);
- Creating (S5) a histogram of the transformation parameters using the histogram voting technique to select the transformation parameters with the highest number of votes, and calculating the number of peaks, their widths and their distances in order to estimate the mapping quality;
- Generating (S6) a georeferenced map using the selected transformation parameters.

2. Method according to claim 1,
**characterized in that**,
the segments of the trajectories have a predefined number of points.

3. Method according to claim 2,
**characterized in that**,
when matching the segments of the trajectories,, matching points of the segments of the respective trajectory are determined.

4. Method according to claim 3,
**characterized in that**,
the matching points have the same timestamps.

5. Method according to claim 1,
**characterized in that**,
the transformation parameters comprise a 2-D translation and rotation.

6. Method according to claim 1,
**characterized in that**,
the registration of the segments is done with a Kabsch algorithm.
